# EUROPÄISCHE PATENTANMELDUNG

(11) **EP 1 003 014 A2**
(43) Veröffentlichungstag der Anmeldung: **24.05.2000**
(21) Anmeldenummer: 99121754.8
(22) Anmeldetag: 03.11.1999
(51) Int. Cl.: G01B 21/02

(54) **Messverfahren für Höhe und Breite eines stabförmigen Walzguts**

(30) Priorität: 18.11.1998 DE 19853256
(71) Anmelder: SMS Demag AG, 40237 Düsseldorf (DE)
(72) Erfinder: Palzer, Otmar, Dr.-Ing., 41364 Jüchen (DE); Broll, Lutz, 57462 Olpe (DE)
(74) Vertreter: Valentin, Ekkehard, Dipl.-Ing.

(57) **Zusammenfassung**

Die vorliegende Erfindung betrifft ein Meßverfahren für eine Höhe (h) und eine dazu senkrechte Breite (b) eines aus einem Walzgerüst (2) auslaufenden stabförmigen Walzguts (1) mittels eines Dickenmeßgeräts, wobei vor dem Messen von Höhe (h) und Breite (b) an einer Vielzahl von Rotationswinkeln (ϕ) winkelspezifische Dicken (d) des Walzguts (1) gemessen werden. Erfindungsgemäß ist vorgesehen, daß aus den winkelspezifischen Dicken (d) durch Vergleich mit einem charakteristischen Dickenverlauf (d*) ein Übereinstimmungswinkel ermittelt wird, an dem die Übereinstimmung der winkelspezifischen Dicken (d) mit dem charakteristischen Dickenverlauf (d*) ein Maximum annimmt, daß aus dem Übereinstimmungswinkel ein Breitenwinkel (β) ermittelt wird und daß das Dickenmeßgerät gemäß dem Breitenwinkel (β) und einem dazu senkrechten Höhenwinkel (α) die Breite (b) und die Höhe (h) des Walzguts (1) mißt.

## Beschreibung

Die vorliegende Erfindung betrifft ein Meßverfahren für eine Höhe und eine dazu senkrechte Breite eines aus einem Walzgerüst auslaufenden stabförmigen Walzguts mittels eines Dickenmeßgeräts, wobei vor dem Messen von Höhe und Breite an einer Vielzahl von Rotationswinkeln winkelspezifische Dicken des Walzguts gemessen werden.

Für die Monitorregelung einer Rundprofil-Feineisenstraße werden die Höhe und die Breite des Rundstabes als Meßgrößen benötigt. Die Orientierung des auslaufenden Walzgutes kann aber z. B. durch Walzenversatz, dejustierte oder verschlissene Führungen, verdreht einlaufendes Walzgut usw. sowohl statisch als auch dynamisch variieren. Im Stand der Technik wird der Dickenverlauf des Walzgutes nach minimalem Durchmesser durchsucht. Der Winkel, bei dem der minimale Durchmesser des Walzguts gemessen wurde, wird dann als Breitenwinkel verwendet. Ein derartiges Verfahren ist z. B. aus der DE 196 47 613 A1 bekannt.

Das Verfahren des Standes der Technik führt nur bei einer deutlichen Ausprägung der Abflachung zum Erfolg. Wenn das Breitenmaß eng um seinen Sollwert toleriert wird, ist dieses Auswertungskriterium nur mit Schwierigkeiten durchführbar.

Die Aufgabe der vorliegenden Erfindung besteht darin, ein Meßverfahren zu schaffen, bei dem insbesondere auch dann der Breitenwinkel mit Sicherheit ermittelt werden kann, wenn die Breite des Walzguts sehr nahe an ihrer Sollbreite liegt.

Die Aufgabe wird dadurch gelöst,
- daß aus den winkelspezifischen Dicken durch Vergleich mit einem charakteristischen Dickenverlauf ein Übereinstimmungswinkel ermittelt wird, an dem die Übereinstimmung der winkelspezifischen Dicken mit dem charakteristischen Dickenverlauf ein Maximum annimmt,
- daß aus dem Übereinstimmungswinkel ein Breitenwinkel ermittelt wird und
- daß das Dickenmeßgerät gemäß dem Breitenwinkel und einem dazu senkrechten Höhenwinkel die Breite und die Höhe des Walzguts mißt.

Höhe und Breite des stabförmigen Walzguts sind miteinander gekoppelt Die Monitorregelung arbeitet daher besser, wenn die Höhe und die Breite des Walzguts gleichzeitig gemessen werden.

Der charakteristische Dickenverlauf weist vorzugsweise zwei einen engen Winkelbereich definierende Maxima mit einem symmetrisch dazwischen angeordnetem Minimum auf, wobei das Minimum mit dem Breitenwinkel korrespondiert.

Die statische Verdrehung des Walzguts ist erheblich größer als die dynamische Schwankung der Verdrehung. Im Prinzip kann es daher im Einzelfall ausreichen, nur vor dem Messen den Breitenwinkel zu bestimmen. Vorzugsweise aber wird der Breitenwinkel auch dynamisch korrigiert. Hierzu werden während des Messens von Höhe und Breite des Walzguts anhand von Hilfsmessungen etwaige Änderungen des Breitenwinkels erfaßt und der Breitenwinkel und der Höhenwinkel gemäß den erfaßten Änderungen des Breitenwinkels nachgeführt.

Wenn die Hilfsmessungen innerhalb des engen Winkelbereichs und insbesondere symmetrisch zum Breitenwinkel erfolgen, sind die Hilfsmessungen besonders einfach auswertbar.

Wenn die Hilfsmessungen gleichzeitig zueinander und insbesondere auch gleichzeitig zur Breitenmessung erfolgen, ist der systematische Fehler der Hilfsmessungen besonders gering. Die Hilfsmessungen können gegebenenfalls die Breitenmessung mit umfassen.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- Figur 1: ein Walzgerüst mit einem Dickenmeßgerät,
- Figur 2: ein stabförmiges Walzgut im Querschnitt,
- Figur 3: einen charakteristischen Dickenverlauf,
- Figur 4: das Dickenmeßgerät und
- Figur 5: ein Auswertungsprinzip für Breitenwinkeländerungen.

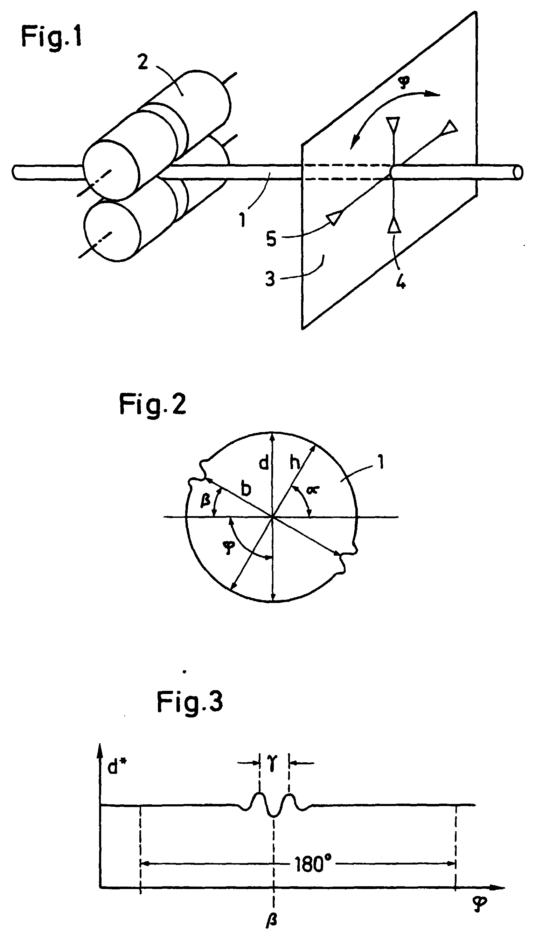

Gemäß Figur 1 verläuft ein stabförmiges Walzgut 1, z. B. Rundstahl 1, aus einem Walzgerüst 2 aus. Hinter dem Walzgerüst 2 ist an einer Erfassungsstelle 3 ein Dickenmeßgerät angeordnet. Das Dickenmeßgerät weist eine Höhenmeßeinrichtung 4 und eine Breitenmeßeinrichtung 5 auf. Mit den Meßeinrichtungen 4, 5 sind eine Höhe h und eine Breite b des Walzguts 1 gleichzeitig meßbar. Die Breite b steht dabei senkrecht auf der Höhe h.

Im Idealfall muß die Höhe h lotrecht und die Breite b waagerecht gemessen werden. In der Praxis ist das Walzgut 1 aber schon wenige Meter hinter dem Walzgerüst 2 deutlich verdreht. Um tatsächlich die Höhe h und die Breite b zu messen, muß die Höhe h gemäß einem Höhenwinkel α und die Breite b gemäß einem Breitenwinkel β gemessen werden. Der Höhenwinkel α und der Breitenwinkel β müssen hierzu selbstverständlich zuvor bestimmt werden.

Das Dickenmeßgerät ist, wie in Figur 1 mittels des Pfeils angedeutet ist, um das Walzgut 1 schwenkbar. Durch Schwenken des Dickenmeßgeräts und gleichzeitiges Messen der Dicken mittels der Meßeinrichtungen 4, 5 können daher an einer Vielzahl von Rotationswinkeln ϕ winkelspezifische Dicken d des Walzguts 1 gemessen werden. Das Ergebnis derartiger Messungen ist beispielhaft in Figur 2 dargestellt. Insbesondere sind aus Figur 2 auch die Winkel α, β ersichtlich.

Um den Breitenwinkel β zu ermitteln, werden die winkelspezifischen Dicken d mit einem in Figur 3 dargestellten charakteristischen Dickenverlauf d* verglichen. Der charakteristische Dickenverlauf d* weist, wie aus Figur 3 ersichtlich ist, zwei Maxima auf, die einen engen Winkelbereich γ definieren. Der enge Winkelbereich beträgt maximal 30 °, besser unter 20 °. Zwischen den Maxima ist - vorzugsweise symmetrisch - ein inneres Minimum angeordnet. Links und rechts außerhalb der Maxima befindet sich jeweils noch ein äußeres Minimum. Das innere Minimum korrespondiert mit dem Breitenwinkel β. Im übrigen Bereich ist der charakteristische Dickenverlauf d* im wesentlichen konstant.

Durch Vergleichen der winkelspezifischen Dicken d mit dem charakteristischen Dickenverlauf d* kann somit ein Übereinstimmungswinkel ermittelt werden, aus dem dann der Breitenwinkel β ermittelbar ist. In der Regel ist es ausreichend, die winkelspezifischen Dicken d mit den beiden Maxima und dem inneren Minimum zu vergleichen. Gegebenenfalls können aber auch die beiden äußeren Minima zusätzlich mit herangezogen werden.

Gemäß Ausführungsbeispiel sind der Übereinstimmungswinkel und der Breitenwinkel β identisch. Unter Verwendung des nunmehr bekannten Breitenwinkels β wird daher das Dickenmeßgerät gemäß dem Breitenwinkel β und dem dazu senkrechten Höhenwinkel α derart eingestellt, daß es die Breite b und die Höhe h des Walzguts 1 mißt.

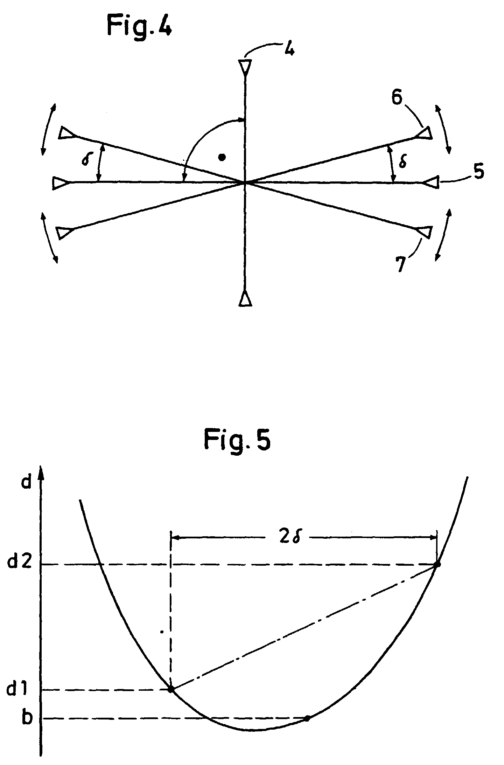

Nach dem Ermitteln des Breitenwinkeis β und Einstellen des Dickenmeßgeräts kann mit dem - gleichzeitigen - Messen von Höhe h und Breite b des Walzguts 1 begonnen werden. Während des Messens von Höhe h und Breite b des Walzguts 1 werden Hilfsmessungen vorgenommen, anhand derer etwaige Änderungen des Breitenwinkels β erfaßt werden. Der Breitenwinkel β und hiermit korrespondierend auch der Höhenwinkel α werden dann gemäß den erfaßten Änderungen des Breitenwinkels β nachgeführt. Zum Durchführen dieser Hilfsmessungen weist das Dickenmeßgerät gemäß Fig. 4 zwei Hilfsmeßeinrichtungen 6, 7 auf. Die Hilfsmeßeinrichtungen 6, 7 sind derart angeordnet, daß sie Hilfsdicken d1, d2 an Hilfswinkeln δ vor und hinter dem Breitenwinkel β messen. Der Hilfswinkel δ ist einstellbar. Er beträgt zwischen 3° und 15°, Meist liegt er im Bereich zwischen 5° und 10°, z. B. bei 7 1/2°.

Mittels der Hilfsmeßeinrichtungen 6, 7 können gleichzeitig zueinander und gleichzeitig zur Breitenmessung die Hilfsmessungen erfolgen. Aufgrund der Anordnung der Hilfsmeßeinrichtungen 6, 7 erfolgen die Hilfsmessungen dabei innerhalb des engen Winkelbereichs γ und symmetrisch zum Breitenwinkel β.

Die Auswertung der Hilfsmessungen kann z. B. dadurch erfolgen, daß aus den Hilfsdicken d1 und d2 in Verbindung mit dem bekannten Hilfswinkel δ Richtung und Größe des Dickenanstiegs von der einen Hilfsmeßeinrichtung 6 zur anderen Hilfsmeßeinrichtung 7 bestimmt werden. Vorzeichen und Größe dieses Dickenanstiegs ergeben dann Richtung und Größe, um den der Breitenwinkel β nachgeführt werden muß. Alternativ kann z. B. auch die gemessene Breite b mit in die Auswertung einbezogen werden. Beispielsweise kann durch die drei Meßpunkte (d1, δ), (b, 0); (d2, -δ) eine Parabel gelegt werden und deren Minimum bestimmt werden. In diesem Fall würden die Hilfsmessungen die Breitenmessung mit umfassen. Es sind aber selbstverständlich auch andere Auswerteverfahren, mit und ohne Einbeziehung der Breitenmessung, denkbar.

In einer eingefahrenen Walzstraße verhält sich jeder Walzgutstab 1 ähnlich wie sein Vorgänger, d. h. er läuft in etwa mit dem gleichen statischen Verdrehungswinkel aus dem Walzgerüst 2 aus. Die Suche nach der Orientierung des Walzgutstabes 1 muß daher nur während der Einfahrphase oder nach Veränderungen in der Einstellung der Walzstraße beim Einlaufen des Walzguts 1 in das Dickenmeßgerät vorgenommen werden. In der eingefahrenen Walzstraße wird das Dickenmeßgerät daher beim Einlaufen des Walzguts 1 auf die Winkelposition seines Vorgängers eingestellt. Die simultane Erfassung von Höhe und Breite kann dadurch direkt vom Walzgutanfang an durchgeführt werden. Nur wenn sich aus den drei Meßwerten der Meßeinrichtungen 5 bis 7 kein Minimum im erwarteten Winkelbereich feststellen läßt, muß der Breitenwinkel β durch das Vergleichsverfahren neu bestimmt werden.

### Bezugezeichenliste

- 1: Walzgut
- 2: Walzgerüst
- 3: Erfassungsstelle
- 4: Höhenmeßeinrichtung
- 5: Breitenmeßeinrichtung
- 6, 7: Hilfsmeßeinrichtungen
- b: Breite
- d: winkelspezifische Dicken
- d*: charakteristischer Dickenverlauf
- d1, d2: Hilfsdicken
- h: Höhe
- α: Höhenwinkel
- β: Breitenwinkel
- γ: enger Winkelbereich
- δ: Hilfswinkel
- ϕ: Rotationswinkel

## Patentansprüche

1. Meßverfahren für eine Höhe (h) und eine dazu senkrechte Breite (b) eines aus einem Walzgerüst (2) auslaufenden stabförmigen Walzguts (1) mittels eines Dickenmeßgeräts, wobei vor dem Messen von Höhe (h) und Breite (b) an einer Vielzahl von Rotationswinkeln (ϕ) winkelspezifischer Dicken (d) des Walzguts (1) gemessen werden,
**dadurch gekennzeichnet,**
- daß aus den winkelspezifischen Dicken (d) durch Vergleich mit einem charakteristischen Dickenverlauf (d*) ein Übereinstimmungswinkel ermittelt wird, an dem die Übereinstimmung der winkelspezifischen Dicken (d) mit dem charakteristischen Dickenverlauf (d*) ein Maximum annimmt,
- daß aus dem Übereinstimmungswinkel ein Breitenwinkel (β) ermittelt wird und
- daß das Dickenmeßgerät gemäß dem Breitenwinkel (β) und einem dazu senkrechten Höhenwinkel (α) die Breite (b) und die Höhe (h) des Walzguts (1) mißt.

2. Meßverfahren nach Anspruch 1,
**dadurch gekennzeichnet,**
daß die Höhe (h) und die Breite (b) des Walzguts (1) gleichzeitig gemessen werden.

3. Meßverfahren nach Anspruch 1 oder 2,
**dadurch gekennzeichnet,**
daß der charakteristische Dickenverlauf (d*) einen engen Winkelbereich (γ) definierende Maxima mit einem symmetrisch dazwischen angeordneten Minimum aufweist, wobei das Minimum mit dem Breitenwinkel (β) korrespondiert.

4. Meßverfahren nach Anspruch 1, 2 oder 3,
**dadurch gekennzeichnet,**
- daß während des Messens von Höhe (h) und Breite (b) des Walzguts (1) anhand von Hilfsmessungen etwaige Änderungen des Breitenwinkels (β) erfaßt werden und
- daß der Breitenwinkel (β) und der Höhenwinkel (α) gemäß den erfaßten Änderungen des Breitenwinkels (β) nachgeführt werden.

5. Meßverfahren nach Anspruch 3 und 4,
**dadurch gekennzeichnet,**
daß die Hilfsmessungen innerhalb des engen Winkelbereichs (γ) erfolgen.

6. Meßverfahren nach Anspruch 5,
**dadurch gekennzeichnet,**
daß die Hilfsmessungen symmetrisch zum Breitenwinkel (β) erfolgen.

7. Meßverfahren nach Anspruch 5 oder 6,
**dadurch gekennzeichnet,**
daß die Hilfsmessungen gleichzeitig zueinander erfolgen.

8. Meßverfahren nach Anspruch 7,
**dadurch gekennzeichnet,**
daß die Hilfsmessungen gleichzeitig zur Breitenmessung erfolgen.

9. Meßverfahren nach einem der Ansprüche 5 bis 8,
**dadurch gekennzeichnet,**
daß die Hilfsmessungen die Breitenmessung mit umfassen.
